# EUROPÄISCHE PATENTSCHRIFT

(11) **EP 1 173 794 B1**
(45) Veröffentlichungstag und Bekanntmachung des Hinweises auf die Patenterteilung: **11.08.2004**
(21) Anmeldenummer: 00940150.6
(22) Anmeldetag: 26.04.2000
(51) Int. Cl.: G02F 1/163

(54) **STEUERVERFAHREN FÜR ELEKTROCHROME VERGLASUNGEN**
CONTROL METHOD FOR ELECTROCHROMIC GLAZING
PROCEDE DE COMMANDE POUR VITRAGES ELECTROCHROMES

(30) Priorität: 29.04.1999 DE 19919750
(43) Veröffentlichungstag der Anmeldung: 23.01.2002
(73) Patentinhaber: Flabeg GmbH & Co. KG, 90766 Fürth (DE)
(72) Erfinder: BARTSCH, Ingo, D-45883 Gelsenkirchen (DE)
(74) Vertreter: Tönhardt, Marion, Dr.
(86) Internationale Anmeldenummer: PCT/DE2000/001311
(87) Internationale Veröffentlichungsnummer: WO 2000/067070

(56) Entgegenhaltungen:
- DE-A- 19 706 918
- US-A- 4 832 468
- US-A- 5 397 888
- PATENT ABSTRACTS OF JAPAN vol. 014, no. 445 (P-1110), 25. September 1990 (1990-09-25) & JP 02 176728 A (TOYODA GOSEI CO LTD;OTHERS: 02), 9. Juli 1990 (1990-07-09)

## Beschreibung

Die Erfindung betrifft ein Verfahren zur Steuerung des Umfärbevorgangs von mehreren elektrochromen Verglasungen, wobei die Umfärbung der individuellen elektrochromen Verglasungen innerhalb des Umfärbeintervalls zwischen einem Startwert Tₛₜₐᵣₜ und einem Endwert T_{end} von individuellen Steuereinheiten gesteuert wird und wobei die individuellen Steuereinheiten von einer zentralen Kontrolleinheit angesteuert werden.

Elektrochrome Verglasungen werden zunehmend dort eingesetzt, wo ein variabler Sonnenschutz oder eine variable Lichtdurchlässigkeit gewünscht wird. Für die elektrochromen Verglasungen kommen verschiedene Aufbauten zur Anwendung. Meist umfassen die elektrochromen Verglasungen elektrochrome Elemente mit einer elektrochromen Schicht auf Basis von Wolframoxid. Dabei haben sich für großflächige Verglasungen besonders solche elektrochromen Elemente bewährt, bei denen neben den zum Anlegen einer elektrischen Spannung erforderlichen Elektrodenschichten als Gegenpart zur Wolframoxidschicht eine als Ionenspeicherschicht wirkende transparente oxidische Gegenelektrodenschicht sowie eine zwischen beide angeordnete Polymer-Elektrolytschicht vorhanden sind.

Die Lichtdurchlässigkeit elektrochromer Verglasungen wird üblicherweise durch das Anlegen einer Spannung an die Elektrodenschichten bzw. durch das Aufprägen eines Stroms verändert. Hierbei wird einerseits angestrebt, den Umfärbevorgang möglichst rasch ablaufen zu lassen, wofür es grundsätzlich wünschenswert ist, mit möglichst hohen Spannungen bzw. Strömen zu arbeiten. Andererseits muß sichergestellt werden, daß das elektrochrome Element der elektrochromen Verglasung nicht durch das Anlegen zu hoher Spannungen bzw. das Fließen zu hoher Ströme dauerhaft geschädigt wird. Dabei ist zu berücksichtigen, daß die zulässigen Spannungen bzw. Ströme u.a. von der Fläche und der Temperatur der elektrochromen Verglasung abhängig sind. Diese Temperaturabhängigkeit ist besonders ausgeprägt bei elektrochromen Elementen mit Polymer-Elektrolytschichten.

Aus der WO 98/37453 ist ein selbstkalibrierendes Steuerverfahren für elektrochrome Elemente bekannt, bei dem einem elektrochromen Element eine Steuereinheit zugeordnet wird, die die für einen Umfärbevorgang an das elektrochrome Element angelegte Spannung in Abhängigkeit von der Temperatur, vom fließenden Strom und von einer Reihe vorgegebener formatunabhängiger Parameter regelt. Das vorbekannte Steuerverfahren dient primär der Ein-stellung der Extremzustände "voll eingefärbt" bzw. "völlig entfärbt". Es erlaubt jedoch auch die Einstellung von Zwischenzuständen. Das so angesteuerte elektrochrome Element kann mit Hilfe einer ihm zugeordneten Steuereinheit individuell auf einen gewünschten Transmissionszustand zwischen den Extremzuständen eingestellt werden.

US-A-4 832 468 offenbart die Ansteuerung einer Vielzahl von elektrochromen Verglasungselementen über eine gemeinsame Kontrolleinheit, die jedes einzelne Element getrennt ansteuern kann, um unterschiedliche Einfärbungsgrade der einzelnen Elemente zu realisieren.

Es ist aus der Praxis bekannt, mehrere elektrochrome Verglasungen mit Hilfe einer zentralen Kontrolleinheit anzusteuern und auf diese Weise bei mehreren solcher Verglasungen einen Umfärbevorgang gleichzeitig zu starten. Dabei hat sich herausgestellt, daß aufgrund der unterschiedlichen Temperatur und unterschiedlicher Größen der individuellen Verglasungen beachtliche Unterschiede in der Umfärbegeschwindigkeit der einzelnen Verglasungen auftreten können, was dazu führt, daß die Lichttransmissionswerte der einzelnen Verglasungen während des Umfärbevorgangs zeitweise erheblich voneinander abweichen. Dies führt zu einem inhomogenen Erscheinungsbild der Verglasungen, was allgemein unerwünscht ist.

Der Erfindung liegt das technische Problem zugrunde, das bekannte Steuerverfahren so zu verbessern, daß es eine weitgehend gleichmäßige Umfärbung aller gemeinsam umgefärbten elektrochromen Verglasungen zuläßt, ohne dabei allerdings die Dauer des Umfärbevorgangs allzusehr zu verlängern.

Die Lösung dieses Problems ist Gegenstand von Anspruch 1. Vorteilhafte Weiterbildungen finden sich in den Unteransprüchen.

Erfindungsgemäß wird das Umfärbeintervall in eine Mehrzahl von Teilintervallen unterteilt. Die Umfärbung der elektrochromen Verglasungen erfolgt unter der Kontrolle der individuellen Steuereinheiten schrittweise über diese Teilintervalle, wobei die zentrale Kontrolleinheit erst dann die Umfärbung der elektrochromen Verglasungen über ein neues Teilintervall startet, wenn alle fehlerfrei arbeitenden Verglasungen die Umfärbung über das vorhergehende Teilintervall beendet haben.

Es versteht sich, daß die Größe der Teilintervalle so gering zu wählen ist, daß eventuelle Lichttransmissionsunterschiede zwischen einzelnen elektrochromen Verglasungen für den normalen Betrachter während der Umfärbung über ein Teilintervall nicht sichtbar sind. Es hat sich gezeigt, daß dies z.B. bei elektrochromen Verglasungen mit elektrochromer Schicht auf Basis von Wolframoxid in der Regel sicher gewährleistet werden kann, wenn die Größe der Teilintervalle so gewählt wird, daß der Lichttransmissionsgrad der einzelnen elektrochromen Verglasungen während der Umfärbung über dieses Teilintervall um maximal 5 %, vorzugsweise höchstens 3 %, voneinander abweicht. Die Teilintervalle sollten dabei nicht zu klein gewählt werden, da mit abnehmender Größe der Teilintervalle einerseits Meßfehler die Steuergenauigkeit der einzelnen elektrochromen Verglasungen zunehmend beeinträchtigen und andererseits der Steuer- und Kontrollaufwand insgesamt zunimmt. Es hat sich gezeigt, daß ein Wert von etwa 2 % für die Veränderung des Lichttransmissionsgrades der elektrochromen Verglasungen innerhalb eines Teilintervalls eine untere Grenze darstellt, die aus den genannten Gründen im Normalfall nicht unterschritten werden sollte.

Die Einhaltung des vorgenannten maximalen Abstands des Lichttransmissionsgrads einzelner Verglasungen von demjenigen der anderen Verglasungen während eines Teilintervalls einer Umfärbung kann unabhängig von den Abmessungen und von sonstigen die Umfärbegeschwindigkeit bestimmenden Größen dadurch gewährleistet werden, daß die Größe der Teilintervalle so gewählt wird, daß sich der Lichttransmissionsgrad der elektrochromen Verglasungen während der Umfärbung über jedes Teilintervall um nicht mehr als diese maximal zulässige Lichttransmissionsgraddifferenz (die, wie bereits gesagt, erfahrungsgemäß bei etwa 5 % liegt) ändert. Es ist jedoch auch möglich, bei bekannter Einbausituation und bei bekannter Größenstaffelung der gemeinsam umzufärbenden Verglasungen die Teilintervalle größer zu wählen, solange sichergestellt ist, daß jedenfalls unter normalen Umständen der Lichttransmissionsgrad der einzelnen Verglasungen zu keinem Zeitpunkt mehr als etwa 5 % von demjenigen der anderen Verglasungen abweicht. In diesem Zusammenhang ist nämlich zu berücksichtigen, daß auch die am langsamsten umfärbende Verglasung zu dem Zeitpunkt, an dem die am schnellsten umfärbende Verglasung ein Teilintervall bereits abgeschlossen hat, ebenfalls zumindest ein Teil des Teilintervalls zurückgelegt hat, so daß die tatsächliche Lichttransmissionsgraddifferenz zwischen allen an der gemeinsamen Umfärbung beteiligten Verglasungen zu allen Zeiten während der Umfärbung über ein Teilintervall geringer ist als die Differenz des Lichttransmissionsgrads der elektrochromen Verglasungen zu Beginn und zum Ende des betreffenden Teilintervalls.

Die Erfindung ist selbstverständlich in entsprechender Anpassung auch anwendbar auf Anordnungen, bei denen den Steuereinheiten von der zentralen Kontrolleinheit nicht nominelle Lichttransmissionswerte, sondern andere den Einfärbungszustand kennzeichnende Stellgrößen übermittelt werden, z.B. "100" für "voll eingefärbt" und "0" für "voll entfärbt". Auch in diesen Fällen sind die Teilintervalle erfindungsgemäß so einzustellen, daß die Unterschiede der einzelnen Verglasungen in ihrem Lichttransmissionsgrad zu jedem Zeitpunkt unmerklich bleiben, insbesondere etwa 5 % nicht überschreiten.

Die angegebenen Prozentwerte für die Teilintervalle verstehen sich als Prozentpunkte, nicht als Relativgrößen. So wird erfindungsgemäß etwa bei einer Umfärbung von einem Lichttransmissionsgrad von 50 % auf einen Lichttransmissionsgrad von 20 % und bei einer vorgegebenen Teilintervallgröße von 5 % stufenweise zunächst auf einen Lichttransmissionsgrad von 45 %, dann auf 40 % usw. bis hinunter auf 25 % und zuletzt 20 % umgefärbt. Dabei sind die genannten Werte für den Lichttransmissionsgrad nominelle Sollgrößen für die Steuerung der elektrochromen Verglasungen, nicht notwendigerweise echte gemessene Lichttransmissionswerte. Es versteht sich, daß die tatsächlichen Werte des Lichttransmissionsgrads der elektrochromen Verglasungen hiervon geringfügig abweichen können, insbesondere dann, wenn der Lichttransmissionsgrad der individuellen Verglasungen nicht unmittelbar gemessen wird, sondern aus anderen Meßgrößen indirekt abgeleitet wird.

Es kann erfindungsgemäß vorgesehen werden, daß das Umfärbeintervall in mehrere Teilintervalle gleicher Größe unterteilt wird. Ein anderes bevorzugtes Verfahren sieht vor, daß mindestens ein Teilintervall zu Beginn eines Umfärbevorgangs von hell zu dunkel kleiner eingestellt wird als die folgenden Teilintervalle. Auf diese Weise kann sichergestellt werden, daß in dem Bereich hoher Lichtdurchlässigkeit, in dem das menschliche Auge besonders empfindlich ist und in dem bei den auf Wolframoxidbasis arbeitenden elektrochromen Elementen ein deutlich erkennbarer Farbumschlag stattfindet, nur besonders geringe Abweichungen des Lichttransmissionsgrads der einzelnen Verglasungen zugelassen werden. Dabei kann beispielsweise so vorgegangen werden, daß ausgehend vom völlig entfärbten Zustand der elektrochromen Verglasung die ersten beiden Teilintervalle eine Größe von 2 % erhalten, während für die nachfolgenden Teilintervalle eine Größe von 4 % vorgegeben wird.

Es bedarf keiner besonderen Erläuterung, daß eine Unterteilung des Umfärbeintervalls in mehrere Teilintervalle in Ausnahmefällen unterbleiben wird, nämlich dann, wenn nur eine geringe Umfärbung der elektrochromen Verglasungen erwünscht ist, so daß das Umfärbeintervall die Größe der erfindungsgemäß vorgegebenen Teilintervalle nicht überschreitet.

Das erfindungsgemäße Steuerverfahren erlaubt das gemeinsame Umfärben mehrerer elektrochromer Glasscheiben mit Hilfe einer zentralen Kontrolleinheit unabhängig von der Art der für die elektrochromen Verglasungen verwendeten elektrochromen Elemente. Die zentrale Kontrolleinheit gibt nur die jeweils einzustellenden Umfärbungs-Zwischenzustände zwischen Tₛₜₐᵣₜ und T_{end} vor und kontrolliert den Umfärbevorgang durch die Auswertung von Statusmeldungen der einzelnen Steuereinheiten, ohne daß sie mit Informationen über die Art, die Größe, die Temperatur oder andere Eigenschaften der einzelnen elektrochromen Verglasungen versorgt werden muß. Dabei kann die zentrale Kontrolleinheit beispielsweise manuell bedient werden, indem ein Benutzer über eine Tastatur oder dergleichen den Endwert T_{end} vorgibt und einen Umfärbevorgang startet. Die Erfindung eignet sich aber ganz besonders zur Integration der elektrochromen Verglasungen in ein Energiemanagementsystem eines Gebäudes, bei dem eine Mehrzahl von elektrisch steuerbaren Geräten von einer Gebäudeleitzentrale angesteuert und kontrolliert wird. Das modulartige Konzept der Erfindung erleichtert diese Integration.

In der Praxis wird die Ansteuerung der individuellen Verglasungen bevorzugt so erfolgen, daß die von der zentralen Kontrolleinheit vorgegebenen Werte für T_{end} sowie die jeweils zurückzulegenden Teilintervalle von den individuellen Steuereinheiten in Ladungsmengen umgerechnet werden. Dabei können grundsätzlich verschiedene Abschaltkriterien verwendet werden. Ein Teilintervall kann beispielsweise dann als abgeschlossen bewertet werden, wenn die für dieses Teilintervall zuvor errechnete Ladungsmenge geflossen ist. Es kann aber auch vorgesehen werden, daß ein Teilintervall dann als abgeschlossen bewertet wird, wenn der durch das elektrochrome Element fließende Strom einen vorgegebenen unteren Schwellenwert unterschreitet. Entsprechende Verfahren offenbart z.B. die WO 98/37453. Andere bekannte Steuerverfahren prägen dem elektrochromen Element einen vorgegebenen Strom auf und werten für ein Abschaltkriterium die sich ergebende Spannung aus. Es können auch mehrere dieser Abschaltkriterien parallel ausgewertet werden. Es ist auch möglich, je nach Einfärbungszustand einer elektrochromen Verglasung (voll eingefärbt, voll entfärbt oder Zwischenzustand) unterschiedliche Abschaltkriterien zu verwenden. Die Steuereinheiten sind entweder selbstkalibrierend (WO 98/37453) oder werden vor ihrem Einsatz mit den erforderlichen Parametern gespeist, die eine rasche und sichere Umfärbung der von ihr anzusteuernden elektrochromen Verglasung ermöglichen (z.B. EP 0 718 667). Für das sichere Umfärben von elektrochromen Verglasungen geeignete Steuerverfahren sind dem Fachmann bekannt und bedürfen hier keiner näheren Erläuterung.

Meist werden die Steuereinheiten zusätzlich zu den vorgenannten Abschaltkriterien weitere Sicherheitskriterien überwachen, mit denen Fehlfunktionen, wie z.B. Kurzschlüsse oder Leitungsunterbrechungen im System, Über- oder Unterschreitungen der zulässigen Temperaturen der Verglasungen und der Steuereinheiten etc., feststellbar sind. Wird eine solche Fehlfunktion festgestellt, so sendet die Steuereinheit eine entsprechende Statusmeldung an die zentrale Kontrolleinheit, woraufhin diese die entsprechende Verglasung als fehlerbehaftet bewertet und sie je nach Art des Fehlers entweder nur für das laufende Teilintervall und gegebenenfalls eines oder mehrere der folgenden Teilintervalle oder bis zur Fehlerbehebung und zum Neustart des Systems durch den Benutzer aus der Abfrageroutine der zentralen Kontrolleinheit herausnimmt.

Um zu vermeiden, daß der Umfärbevorgang aufgrund einer untypischen Fehlfunktion bei einer elektrochromen Verglasung oder ihrer Steuereinheit, die von der Steuereinheit oder der zentralen Kontrolleinheit nicht als Fehler erkannt wurde, zum Stillstand kommt oder über die Maßen verlangsamt wird, ist nach einer besonderen Ausführungsform der Erfindung vorgesehen, daß eine individuelle elektrochrome Verglasung von dem Zeitpunkt an als nicht fehlerfrei arbeitend eingestuft wird, zu dem eine für das jeweilige Teilintervall für diese Verglasung vorab festgelegte Zeitobergrenze erreicht wird. Die zentrale Kontrolleinheit nimmt diese als fehlerhaft bewertete elektrochrome Verglasung zumindest für das aktuelle Teilintervall aus der Abfrageroutine heraus und setzt die Umfärbung über das folgende Teilintervall fort, sobald alle anderen fehlerfreien Verglasungen die Umfärbung über das aktuelle Teilintervall beendet haben. Die Zeitobergrenzen werden im Normalfall zu Beginn eines Teilintervalls individuell für jede umzufärbende Verglasung in Abhängigkeit vom Einfärbungszustand, von der Fläche der Verglasung bzw. der für das Teilintervall erforderlichen Ladungsmenge und von der Temperatur mittels geeigneter Näherungsformeln errechnet. Alternativ kann auch mit Tabellen gearbeitet werden, in denen für alle denkbaren verschiedenen Zustände einer elektrochromen Verglasung Zahlenwerte für die jeweils anzuwendenden Zeitobergrenzen hinterlegt sind. Die Zeitobergrenzen sollten einen ausreichenden Abstand von derjenigen Zeitspanne aufweisen, die für eine normal verlaufende Umfärbung für das betreffende Teilintervall für die jeweilige Verglasung rechnerisch abschätzbar ist, so daß dieses Fehlerkriterium nur in Ausnahmefällen zum Tragen kommt.

Das erfindungsgemäße Steuerverfahren ist vergleichsweise wenig störanfällig und vermeidet weitestgehend, daß die Fehlfunktion einzelner elektrochromer Verglasungen oder der ihnen zugeordneten Steuereinheiten den Umfärbevorgang der übrigen Verglasungen störend beeinträchtigt.

Die Erfindung wird nachfolgend mit Hilfe eines Blockschaltbildes erläutert.

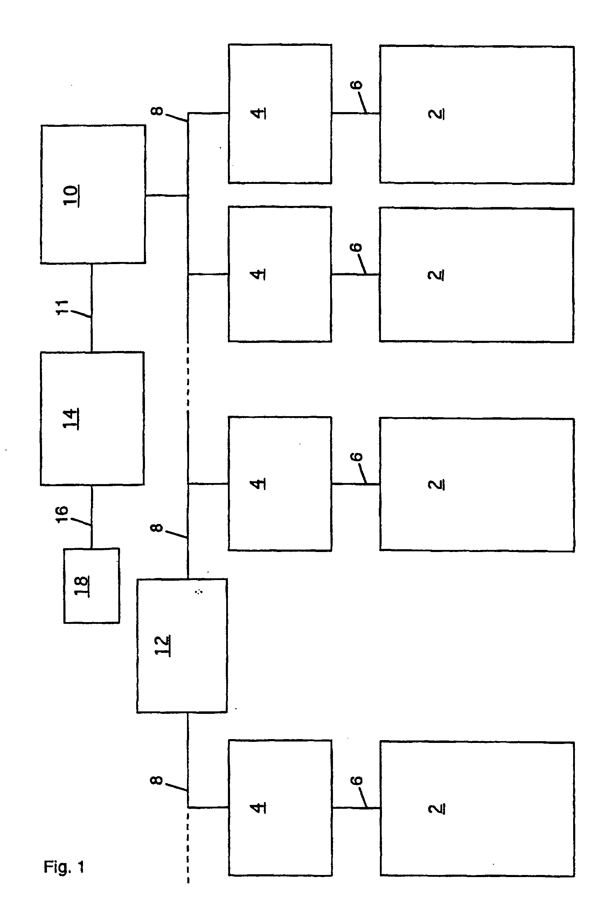

Die einzige Figur zeigt mehrere elektrochrome Verglasungen 2 mit den ihnen zugeordneten individuellen Steuereinheiten 4. Die Steuereinheiten 4 sind mit ihren elektrochromen Verglasungen 2 über Steuer- und Versorgungsleitungen 6 verbunden, über die Meß- und Steuersignale ausgetauscht werden können und über die eine einen Umfärbevorgang bewirkende Spannung an die elektrochromen Verglasungen 2 anlegbar ist. Die Höhe der angelegten

Spannung bzw. die Stärke eines aufgeprägten Stromes kann auf verschiedene Weise geregelt werden. Im Rahmen der Erfindung wird für die Ansteuerung der individuellen Verglasungen bevorzugt nach der Lehre der WO 98/37453 gearbeitet, die ein besonders schonendes Umfärben und damit eine lange Lebensdauer elektrochromer Elemente ermöglicht. Auf die Lehre dieser Veröffentlichung wird zur Vermeidung von Wiederholungen ausdrücklich Bezug genommen.

Die Steuereinheiten 4 sind beispielsweise über eine (nicht dargestellte) Netzleitung mit dem Gebäudestromnetz (z.B. 230 V Wechselspannung) verbunden. Sie umfassen typischerweise ein Netzgerät (AC/DC-Wandler), eine regelbare Strom-/Spannungsquelle für die Ansteuerung der elektrochromen Verglasungen 2, eine Recheneinheit zur Berechnung von Steuerparametern, Meßgeräte für Größen wie Strom, Spannung und/oder Zeit, Signalgeber für das Absenden von Statusmeldungen usw. Um Leitungsverluste, die die Genauigkeit der Steuerung der elektrochromen Verglasungen 2 reduzieren würden, gering zu halten, sind die Steuereinheiten 4 bevorzugt als Einzelgeräte gestaltet und in unmittelbarer Nähe der von ihnen gesteuerten Verglasung 2 angeordnet. Es liegt jedoch im Rahmen der Erfindung, mehrere Steuereinheiten 4 in einem gemeinsamen Steuergerät zusammenzufassen, wenn die Verglasungen 2 nur einen geringen räumlichen Abstand voneinander aufweisen, so daß die Steuer- und Versorgungsleitungen 6 kurz bleiben können. Die Steuer- und Versorgungsleitungen 6 sind in der Regel mindestens vieradrig auszulegen, so daß für die Steuersignal- und/oder die Meßwertübermittlung und für die an die elektrochromen Verglasungen 2 anzulegende Versorgungsspannung jeweils mindestens zwei Adern zur Verfügung stehen.

Die einzelnen Steuereinheiten 4 sind über einen Bus 8 untereinander sowie mit einer zentralen Kontrolleinheit 10 verbunden. Sie könnten auch über separate Einzelleitungen einzeln und unmittelbar sternartig mit der zentralen Kontrolleinheit 10 verbunden werden, was aber den Verkabelungsaufwand erhöhen würde.

Die zentrale Kontrolleinheit 10 initiiert und kontrolliert die Umfärbevorgänge der individuellen elektrochromen Verglasungen 2. Sie sendet dazu über den Bus 8 ihre Steuersignale an die einzelnen Steuereinheiten 4 und erhält über ihn Statusmeldungen der Steuereinheiten 4. Bei einer großen Anzahl von gleichzeitig umzufärbenden elektrochromen Verglasungen 2 oder bei einem großen räumlichen Abstand der Verglasungen 2 voneinander oder von der zentralen Kontrolleinheit 10 kann es zum Ausgleich von Leitungsverlusten erforderlich sein, im Bus 8 an geeigneter Stelle einen Signalverstärker (Repeater) 12 vorzusehen, mit dem die ausgetauschten Signale verstärkt werden. Der Bus 8 kann im einfachsten Falle eine - vorzugsweise verpolungssichere - Zweidrahtleitung sein. Für die Signalübermittlung sind je nach Bedarf unterschiedliche Verfahren einsetzbar (analog, digital, verschiedene Übertragungsprotokolle etc.).

Die zentrale Kontrolleinheit 10 ist zur Gewährleistung einer möglichst universellen Einsetzbarkeit bevorzugt als separate Baueinheit gestaltet. Es ist jedoch insbesondere bei einer geringen Anzahl von gemeinsam umzufärbenden elektrochromen Verglasungen 2 auch möglich, einzelne oder alle Steuereinheiten 4 und die zentrale Kontrolleinheit 10 in einem Gerät zusammenzufassen.

Die zentrale Kontrolleinheit 10 ist über eine eingebaute standardisierte Schnittstelle, z.B. eine RS-485-Schnittstelle, und eine Verbindungsleitung 11 mit einem Adapter (Gateway) 14 verbunden, der für einen Signalübergang in ein Hausbussystem 16, z.B. nach dem LON-Standard, nach dem EIB-Standard oder nach einem anderen gebräuchlichen Standard, sorgt. Hierdurch wird es möglich, die elektrochromen Verglasungen 2 mit einer Gebäudeleitzentrale 18 zu verbinden, über die eine zentrale Ansteuerung von energietechnischen und klimarelevanten Geräten eines Gebäudes erfolgt. Der Adapter 14 könnte auch Teil der zentralen Kontrolleinheit 10 sein. Es ist zusätzlich oder alternativ möglich, die zentrale Kontrolleinheit 10 unmittelbar von einem Benutzer betätigen zu lassen, z.B. über ein Tastenfeld oder dergleichen, und auf eine Integration in ein Hausbussystem zu verzichten. Schließlich können an verschiedenen Stellen des Systems Schnittstellen vorgesehen werden, um Verbindungsmöglichkeiten zu anderen Signalnetzen bereitzustellen oder Eingriffe von außen zu ermöglichen. Das erfindungsgemäße Steuerverfahren bleibt bei allen diesen Varianten unverändert.

Die Erfindung wird am Beispiel einer Umfärbung von einem Startwert Tₛₜₐᵣₜ von 50 % auf einen Endwert T_{end} von 20 % erläutert. Die angegebenen Zahlen stellen wie die im folgenden genannten Zahlen jeweils Sollwerte (nominell) für den Lichttransmissionsgrad der elektrochromen Verglasungen 2 dar. Der Umfärbevorgang wird gestartet, indem entweder manuell oder über das Hausbussystem 16 der zentralen Kontrolleinheit 10 der angestrebte Endwert der Umfärbung T_{end} von 20 % mitgeteilt und die Umfärbung initiiert wird. Die zentrale Kontrolleinheit 10 errechnet aus dem ihr bekannten aktuellen Startwert Tₛₜₐᵣₜ von 50 % und dem Zielwert T_{end} von 20 % das komplette Umfärbeintervall von 30 % und unterteilt dieses in sechs Teilintervalle von 5 %. Die zentrale Kontrolleinheit 10 sendet daraufhin über den Bus 8 ein Steuersignal an die einzelnen Steuereinheiten 4 ab, mit dem diese angewiesen werden, den Lichttransmissionsgrad der an sie angeschlossenen elektrochromen Verglasung 2 um 5 % auf 45 % abzusenken.

Die Steuereinheiten 4 errechnen aus der Vorgabe für den einzustellenden Lichttransmissionsgrad die für die Teilumfärbung der zugeordneten elektrochromen Verglasung 2 erforderliche Ladungsmenge und errechnen außerdem eine für das bevorstehende Teilintervall geltende Zeitobergrenze, deren Überschreitung als Fehlerkriterium gelten soll. Sobald eine elektrochrome Verglasung 2 die entsprechende Teilumfärbung abgeschlossen hat, was von der zugeordneten Steuereinheit 4 durch die Auswertung eines vorgegebenen Abschaltkriteriums festgestellt wird, sendet die betreffende Steuereinheit 4 eine entsprechende Statusmeldung über den Bus 8 an die zentrale Kontrolleinheit 10. Wird andererseits die zuvor errechnete Zeitobergrenze erreicht, bevor das Abschaltkriterium erfüllt ist, so sendet die Steuereinheit 4 eine Fehlermeldung an die zentrale Kontrolleinheit 10, die dieser die Fortsetzung des Umfärbevorgangs über das folgende Teilintervall ermöglicht, wenn alle anderen fehlerfreien Verglasungen 2 die Teilumfärbung über das aktuelle Teilintervall abgeschlossen haben. Es kann in diesem Falle außerdem vorgesehen werden, daß die entsprechende Verglasung 2 von der zentralen Kontrolleinheit 10 bis zum Abschluß des Umfärbevorgangs als fehlerbehaftet bewertet und dauerhaft aus der Abfrageroutine ausgeschlossen wird, um ein zügiges Umfärben der restlichen Verglasungen 2 zu ermöglichen. Es kann aber auch vorgesehen werden, derartige Verglasungen 2 wieder als fehlerfrei zu bewerten und in die Abfrageroutine der zentralen Kontrolleinheit 10 aufzunehmen, wenn eine der folgenden Teilumfärbungen von dieser Verglasung 2 vor dem Erreichen der Zeitobergrenze absolviert wurde. Dabei kann zur Vereinfachung des Informatiuonsaustauschs zwischen der zentralen Kontrolleinheit 10 und den Steuereinheiten 4 vorgesehen werden, daß die Steuereinheiten 4 beim Überschreiten der Zeitobergrenze anstelle einer Fehlermeldung eine Statusmeldung "Teilumfärbung abgeschlossen" absenden.

Sobald alle Steuereinheiten 4 entweder eine Statusmeldung "Fehler" oder eine Statusmeldung "Teilumfärbung abgeschlossen" an die zentrale Kontrolleinheit 10 abgesandt haben, startet diese durch Absendung entsprechender Steuersignale an die Steuereinheiten 4 die folgende Teilumfärbung über das nächste Teilintervall von 5 % auf einen Zwischenwert von 40 %. Dieser Vorgang wiederholt sich, bis schließlich der Endwert T_{end} erreicht und die Umfärbung aller elektrochromer Verglasungen 2 abgeschlossen ist.

Bei einem praktischen Versuch wurden 10 elektrochrome Verglasungen benachbart zueinander in einer Gebäudefassade eingebaut. Die elektrochromen Verglasungen umfaßten elektrochrome Elemente mit zwei transparenten Elektrodenschichten, einer elektrochromen Wolframoxidschicht, einer transparenten Gegenelektrodenschicht (Ionenspeicherschicht) und einer Polymer-Elektrolytschicht. Die elektrochrome Verglasung mit der größten Fläche war etwa doppelt so groß wie die kleinste Verglasung. Aufgrund von unterschiedlicher Sonneneinstrahlung und von Abschattungseffekten wiesen die elektrochromen Verglasungen zeitweise erhebliche Temperaturunterschiede auf. Durch die Anwendung des erfindungsgemäßen Verfahrens mit Teilintervallen von 5 % konnte erreicht werden, daß die einzelnen elektrochromen Verglasungen während eines Umfärbevorgangs zwischen den Extremwerten "voll entfärbt" (Tₛₜₐᵣₜ = 50 %) und "voll eingefärbt" (T_{end} = 15 %) nicht erkennbar in ihrer Lichtdurchlässigkeit voneinander abwichen. Die Fassade wirkte zu jeder Zeit völlig homogen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zur Steuerung des Umfärbevorgangs von mehreren elektrochromen Verglasungen (2), wobei die Umfärbung einer individuellen elektrochromen Verglasung (2) innerhalb des Umfärbeintervalls zwischen einem Startwert Tₛₜₐᵣₜ und einem Endwert T_{end} des Lichttransmissionsgrades von einer individuellen Steuereinheit (4) gesteuert wird und wobei die individuellen Steuereinheiten (4) von einer zentralen Kontrolleinheit (10) angesteuert werden, **dadurch gekennzeichnet, daß** das Umfärbeintervall in eine Mehrzahl von Teilintervallen unterteilt wird und daß die Umfärbung der elektrochromen Verglasungen (2) unter der Kontrolle der individuellen Steuereinheiten (4) schrittweise über diese Teilintervalle erfolgt, wobei die zentrale Kontrolleinheit (10) erst dann die Umfärbung der elektrochromen Verglasungen über ein neues Teilintervall startet, wenn alle fehlerfrei arbeitenden Verglasungen die Umfärbung über das vorhergehende Teilintervall beendet haben.

2. Verfahren nach Anspruch 1, wobei die Größe der Teilintervalle so gewählt ist, daß der Lichttransmissionsgrad der einzelnen elektrochromen Verglasungen während der Umfärbung über dieses Teilintervall um maximal 5 %, vorzugsweise höchstens 3 %, voneinander abweicht

3. Verfahren nach einem der vorangehenden Ansprüche, **dadurch gekennzeichnet, daß** die Größe der Teilintervalle so gewählt ist, daß sich der Lichttransmissionsgrad der elektrochromen Verglasungen innerhalb eines Teilintervalls um mindestens 2 % ändert.

4. Verfahren nach einem der vorangehenden Ansprüche, **dadurch gekennzeichnet, daß** das Umfärbeintervall in Teilintervalle mit gleicher Größe unterteilt wird.

5. Verfahren nach einem der Ansprüche 1 bis 3, **dadurch gekennzeichnet, daß** mindestens ein Teilintervall zu Beginn eines Umfärbevorgangs von hell zu dunkel kleiner eingestellt wird als die folgenden Teilintervalle.

6. Verfahren nach einem der vorangehenden Ansprüche, **dadurch gekennzeichnet, daß** eine individuelle elektrochrome Verglasung als nicht fehlerfrei arbeitend bewertet wird, sobald eine für das jeweilige Teilintervall für diese Verglasung vorab festgelegte Zeitobergrenze erreicht wird.

## Claims

1. Process of controlling the colour-change process of several electrochromic glazings, where the colour change of each individual electrochromic glazing is controlled within the colour-change interval between an initial value Tₛₜₐᵣₜ and a final value T_{end} by an individual control unit and where the individual control units are activated by a central monitor unit, **characterized in that** the colour-change interval is subdivided into a number of subintervals and that the colour change of the electrochromic glazings takes place under the control of the individual control units step-by-step over these subintervals, where the central monitor unit only initiates the colour change of the electrochromic glazings over a new subinterval when all satisfactorily operating glazings have completed colour change over the preceding subinterval.

2. Process in accordance with Claim 1, that the size of the subintervals is chosen such that the light transmission factors of the individual electrochromic glazings differ from one another during colour change over this subinterval by a maximum of 5 %, preferably by a maximum of 3 %.

3. Process in accordance with one of the foregoing claims, **characterized in that** the size of the subintervals is chosen such that the light transmission factor of the electrochromic glazings alters within this subinterval by at least 2 %.

4. Process in accordance with one of the foregoing claims, **characterized in that** the colour-change interval is subdivided into subintervals of the same size.

5. Process in accordance with one of Claims 1 to 3, **characterized in that** at least one subinterval at the beginning of a colour change from bleached to coloured is set smaller than the subsequent subintervals.

6. Process in accordance with one of the foregoing claims, **characterized in that** an individual electrochromic glazing is assessed as not operating satisfactorily as soon as an upper time limit previously specified for the subinterval in question for this glazing is reached.

## Revendications

1. Procédé de commande du processus de recoloration de plusieurs vitrages électrochromes (2), la recoloration d'un vitrage électrochrome (2) individuel pendant l'intervalle de recoloration étant commandée par une unité de commande (4) individuelle (4) entre une valeur initiale Tₛₜₐᵣₜ et une valeur finale T_{end} du degré de transmission de lumière, et les unités de commande (4) individuelles étant commandées par une unité de contrôle (10) centrale, **caractérisé en ce que** l'intervalle de recoloration est divisé en une pluralité d'intervalles partiels et **en ce que** la recoloration des vitrages électrochromes (2) est réalisée sous le contrôle des unités de commande (4) individuelles pendant ces intervalles partiels, l'unité de contrôle (10) centrale ne démarrant la recoloration des vitrages électrochromes pendant un nouvel intervalle partiel que lorsque tous les vitrages travaillant sans défaut ont terminé la recoloration pendant l'intervalle partiel précédent.

2. Procédé selon la revendication 1, dans lequel la grandeur des intervalles partiels est choisie de telle sorte que pendant la recoloration les degrés de transmission de lumière des différents vitrages électrochomes diffèrent l'un de l'autre pendant cet intervalle partiel de 5% au maximum, de préférence de 3% au maximum.

3. Procédé selon l'une quelconque des revendications précédentes, **caractérisé en ce que** la grandeur des intervalles partiels est choisie de telle sorte que pendant un intervalle partiel le degré de transmission de lumière des vitrages électrochromes varie d'au moins 2%.

4. Procédé selon l'une quelconque des revendications précédentes, **caractérisé en ce que** l'intervalle de recoloration est divisé en intervalles partiels d'une même grandeur.

5. Procédé selon l'une quelconque des revendications 1 à 3, **caractérisé en ce qu'**en début d'un processus de recoloration pour passer de clair à sombre au moins un intervalle partiel est réglé plus court que les intervalles partiels suivants.

6. Procédé selon l'une quelconque des revendications précédentes, **caractérisé en ce qu'**un vitrage électrochrome individuel est jugé comme ne travaillant pas sans défaut dès qu'une limite supérieure de temps prédéterminée pour l'intervalle partiel respectif pour ce vitrage est atteinte.
